# EUROPÄISCHE PATENTSCHRIFT

(11) **EP 3 646 451 B1**
(45) Veröffentlichungstag und Bekanntmachung des Hinweises auf die Patenterteilung: **22.07.2026**
(21) Anmeldenummer: 18826343.8
(22) Anmeldetag: 19.12.2018
(51) Int. Cl.: H02K 11/02

(54) **VORRICHTUNG ZUR REDUZIERUNG VON SCHÄDLICHEN LAGERSPANNUNGEN**
DEVICE FOR REDUCING HARMFUL BEARING VOLTAGES
DISPOSITIF DE RÉDUCTION DE TENSIONS DE PALIER NÉFASTES

(30) Priorität: 20.12.2017 DE 102017130647
(43) Veröffentlichungstag der Anmeldung: 06.05.2020
(73) Patentinhaber: ebm-papst Mulfingen GmbH & Co. KG, 74673 Mulfingen (DE)
(72) Erfinder: KROTSCH, Jens, 97996 Niederstetten (DE); SCHROTH, Sebastian, 74635 Kupferzell (DE)
(74) Vertreter: Staeger & Sperling Partnerschaftsgesellschaft mbB
(86) Internationale Anmeldenummer: PCT/EP2018/086010
(87) Internationale Veröffentlichungsnummer: WO 2019/122032

(56) Entgegenhaltungen:
- DE-A1- 102015 112 146
- DE-B3- 102004 016 738
- US-A1- 2003 057 783
- US-A1- 2016 329 780
- LUDOIS DANIEL C ET AL: "Brushless mitigation of bearing currents via capacitively coupled shunting", 2014 INTERNATIONAL CONFERENCE ON ELECTRICAL MACHINES (ICEM), IEEE, 2 September 2014 (2014-09-02), pages 2336 - 2342, XP032687534, DOI: 10.1109/ICELMACH.2014.6960512

## Beschreibung

Die vorliegende Erfindung betrifft eine Vorrichtung zur Reduzierung von unerwünschten Lagerspannungen in einer elektrischen Maschine mit isolierten Lagern und isolierten Statorblechen.

Drehzahlveränderbare Motoren werden heute überwiegend von Spannungszwischenkreisumrichtern gespeist. Die Speisung durch den Spannungszwischenkreisumrichter kann jedoch zu unerwünschten Lagerspannungen führen, was wiederum zu schädigenden Lagerströmen in den Lagern des Motors führt. Ein solcher Stromfluss durch die Lager kann bei elektrischen Maschinen mit Wälz- und Gleitlagern zu Schäden bis hin zum totalen Ausfall führen.

Bei Motoren ohne isolierte Statorbleche finden sich beispielsweise Schleifringe oder Wellenkondensatoren, die zu einer Verringerung der Lagerspannung beitragen. Diese werden zwischen einem geerdeten Gehäuse und der Welle des Rotors angebunden. Mittels Schleifringen oder dem Wellenkondensator kann eine kapazitive Verbindung zwischen dem Rotor und dem Erdpotential hergestellt werden.

Aus dem Stand der Technik sind weitere Abhilfemaßnahmen bekannt. So lehren die Druckschriften EP 1 445 850 A1 bzw. DE 10 2004 016 738 B3 eine Vorrichtung zum Schutz eines Lagers einer Elektromaschine zu verwenden, die eine Kompensationsanordnung bzw. eine Kompensationseinrichtung zur Erzeugung eines Kompensationsstroms für die Kompensation eines Störstroms durch die Lager vorsieht.

Als alternative Abhilfe wurden in der Vergangenheit hierzu stromisolierte bzw. elektrisch isolierende Lager, z. B. Lager mit einer Keramikisolierung am Außenring oder Hybridlager mit Keramik-Walzkörpern, verwendet. Dennoch besteht bei Verwendung von isolierten Lagern und gleichzeitig isolierten, insbesondere isolierend umspritzen Statorblechen unter Berücksichtigung hochfrequent nicht definiert angebundener Statoren eine unerwünschte Lagerspannung, die es zu vermeiden gilt.

Weiterer druckschriftlicher Stand der Technik im vorliegenden technischen Gebiet, welcher den Oberbegriff des Anspruchs 1 widerspiegelt, ist in den Druckschriften US 2016/329 780 A1, DE 10 2015 112 146 A1, US 2003/057 783 A1 und DE 10 2004 016 738 B3 offenbart.

Der Erfindung liegt deshalb die Aufgabe zugrunde, vorgenannte Probleme zu überwinden und eine Lösung bereit zu stellen, mit welcher die unerwünschten Lagerspannungen und daraus resultierenden Lagerströme bei elektrischen Maschinen mit isolierten Lagern und gleichzeitig isolierten Statorblechen wirksam reduziert werden können.

Diese Aufgabe wird mittels einer Vorrichtung mit den Merkmalen von Anspruch 1 gelöst.

Der Grundgedanke der Erfindung ist darin zu sehen, dass gezielt eine Impedanz zwischen Rotor und Stator oder Lageraußenring angeschlossen wird, die von der Größenordnung einem mehrfachen der Lagerkapazität entspricht, wobei die Lageraußenringe und der Stator isoliert aufgebaut werden.

Das Konzept, den Rotor mit dem Statorblech zu verbinden ( wobei der Lageraußenring isoliert vom Statorblech aufgebaut und daher gegenüber Erde isoliert ist), stellt gegenüber dem Stand der Technik eine Verbesserung zum Schutz der isolierten Lager dar.

Mittels moderner Fertigungsverfahren ist es bevorzugt, das Umspritzen von Statorblechen bei Motoren kleiner Leistungen vorzusehen. Hierdurch wird die Isolation der Statorbleche des Motors gegenüber dem Lageraußenring (LA) realisiert. Das somit an den Statorblechen anliegende Potential steigt aufgrund einer Gleichtaktänderung an den Klemmen des Motors gegenüber dem Erdpotential deutlich an.

Der Rotor selbst weißt dabei ebenfalls eine kapazitive Kopplung gegenüber der Erde auf. Diese wird durch das Umspritzen des Stators nur geringfügig verändert, wodurch der Rotor weiterhin sein Potential behält. Für hochkapazitive Anbauten am Rotor liegt dann das Rotorpotential, das deutlich geringer ist als das Statorpotential, nahe dem Erdpotential.

Erfindungsgemäß ist vorgesehen, die Impedanz zwischen Rotor und Stator zu verringern, und zwar durch eine dazwischen angeordnete Bypass-Kapazität. Aufgrund dieser Maßnahme gleichen sich bei richtiger Dimensionierung die Potentiale zwischen Stator und Rotor an und die am rotorseitigen und statorseitigen Lager anliegende Spannung sinkt ab.

Wird nun die Kapazität des Bypasskondensators zwischen Lageraußenring und Welle bzw. dem damit leitfähig verbundenen Rotor erhöht, so steigt das BVR-Verhältnis (bearing voltage ratio) des Motors bei gemasstem ( d.h. mit Masse verbundenen) oder bei geerdeten Statorblechen deutlich an. Weist der Motor dagegen isolierte oder umspritze Statorbleche auf, so sinkt das BVR, womit eine Reduktion der Lagerspannung erreicht wird. Dabei wird von einem gegenüber dem Rotor oder den Statorblechen isolierten Lagersitz ausgegangen.

Aufgrund des Einsatzes von elektrischen Motoren in den unterschiedlichsten Applikationen variiert die Rotor-Erdkapazität (*C_{RE}*) entsprechend deutlich. So liegt in Anwendungsfällen mit metallischen Anbauten am Rotor eine hohe Rotor-Erd-Kapazität (*C_{RE}*) vor, während in Anbauten mit bspw. Kunststoff oder Isolationswerkstoffen eine niedrige Rotor-Erd-Kapazität (*C_{RE}*) gegeben ist.

In einer vorteilhaften Ausgestaltung der Erfindung ist vorgesehen die Konfiguration des Bypass-Kondensators mittels diskret aufgebauter Kondensatoren und mittels Anschluss an die Welle zu realisieren.

Eine hierzu bevorzugte Möglichkeit besteht darin, die Kondensatoren mittels Schleifringen oder Bürsten elektrisch an die Welle anzubinden, da diese bei Rotation keine störende galvanische, sondern nur eine kapazitive Kopplung aufbauen.

Um die Isolationseigenschaften des Motors aufrecht zu erhalten ist ein Y-Kondensator mit ausreichender Isolationsfestigkeit auf der einen Seite mit dem Statorpaket elektrisch verbunden, während die andere Seite des Kondensators an einen Wellenkontaktring oder Wellenkondensator angeschlossen wird. Der Wellenkontakt kann dabei beispielsweise durch eine Kontaktierung von Microfaserbürsten, welche auf der Welle schleifen, hergestellt werden. Für den Kontakt zur Welle kann sowohl eine galvanisch leitfähige Verbindung, als auch eine kapazitive Verbindung (aufgrund eines Freischleifvorgangs) der Microfaserbürsten bestehen.

In einer weiteren vorteilhaften Ausführungsform der Erfindung, vorzugsweise bei der Anwendung bei Außenläufermotoren, kann der Bypass-Kondensator auch mittels Dielektrika zwischen dem isolierten Stator und der Welle realisiert werden.

In einer ebenfalls vorteilhaften Ausführungsform der Erfindung kann vorgesehen sein, dass durch Erhöhen der parasitären Kopplungen zwischen Lager und Erde das Verfahren für größere Rotor-Erd-Kapazitäten (*C_{RE}*) optimiert wird.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: ein Ersatzschaltbild des Kapazitätsnetzwerkes für eine exemplarische Ausführungsform der Erfindung;
- Fig. 2: eine Darstellung des BVR für einen floatenden, einen gemassten und einen geerdeten Stator für das rotorseitige und das statorseitige Lager und
- Fig. 3: das BVR-Verhältnis bei variierender Rotor-Erd-Kapazität in der Darstellung links ohne den Bypass-Kondensator und in der Darstellung rechts daneben mit einem Bypass-Kondensator.

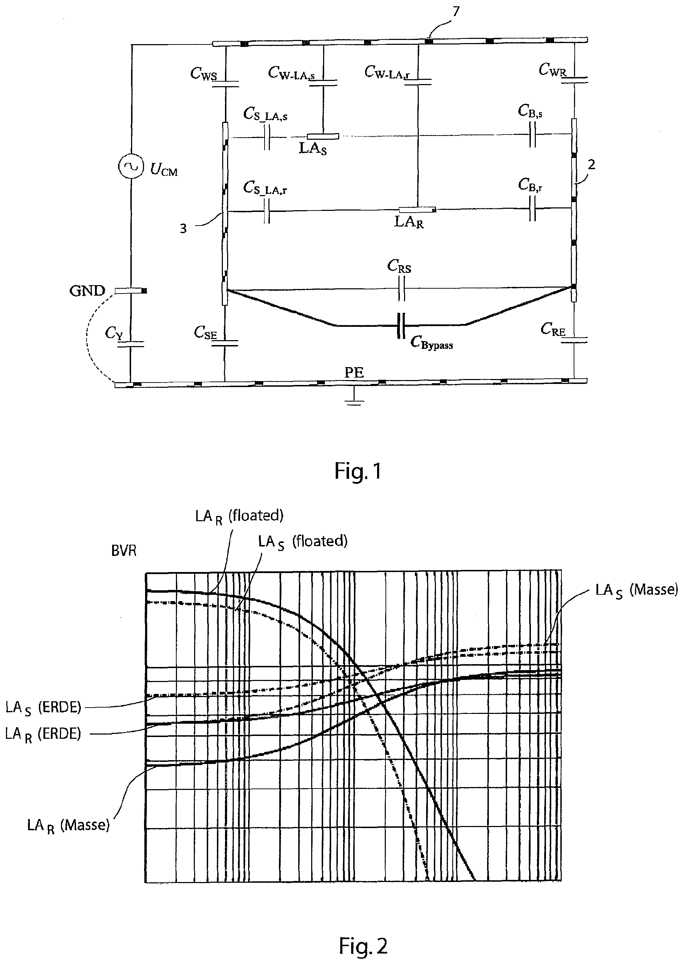

Die Erfindung wird nachfolgend anhand bevorzugter Ausführungsbeispiele mit Bezug auf die Figuren 1 bis 3 näher beschrieben, wobei gleiche Bezugszeichen auf gleiche funktionale und/oder strukturelle Merkmale hinweisen.

In der Figur 1 ist ein Ersatzschaltbild für einen Elektromotor einer exemplarischen Ausführungsform der Erfindung gezeigt. Das gezeigte Ersatzschaltbild repräsentiert das Kapazitätsnetzwerk für die entsprechenden Ausführungen mit den systembedingten Kapazitäten C_{ws}, C_{W-LAs}, C_{W-LAr}, C_{WR}, C_{BS}, C_{BR}, C_{RS}, C_{RE}, C_{SE}, C_{Y}, C_{S-LAS}, C_{S-LAr}., jeweils repräsentierend beispielhaft die Kapazitäten zwischen W = Wicklung, LA = Lageraußenring (r=rotorseitig, s= statorseitig), R = Rotor und S = Stator sowie weiterer Kapazitäten zwischen den jeweiligen Bauteilen des Motors auf die jedoch nicht näher eingegangen wird. Ferner ist das Potential PE der Schutzerde in dem Netzwerk dargestellt, sowie das Massebezugspotential GND und die Gleichtaktspannung U_{CM}. Die Motorwicklung ist mit dem Bezugszeichen 7 gekennzeichnet.

Erfindungsgemäß sind der Rotor 2 und der Stator 3 über eine Bypass-Kapazität C_{Bypass} miteinander elektrisch verbunden, wodurch sich die Potentiale zwischen Rotor 2 und Stator 3 aneinander anpassen und demzufolge sinkt die am rotorseitigen Lager LA_{R} und am statorseitigen LA_{S} jeweils anliegende Spannung ab.

Für eine Auswertung des Effekts eines Bypass-Kondensators wird, wie in Figur 2 gezeigt, zunächst die Kapazität des Bypass-Kondensator zwischen 1 pF und 10 nF variiert und das BVR (Bearing Voltage Ratio) d. h. das Verhältnis angelegter Gleichtaktspannung U_{CM} zur Spannung am Lager sowohl für das rotorseitige Lager LA_{R} als auch das statorseitigen LA_{S} bestimmt. Die Ergebnisse sind für das rotorseitige Lager LA_{R} mit durchgezogener Linie und für das statorseitigen LA_{S} mittels Strichlinie dargestellt. Wird somit der Bypass-Kondensator C_{Bypass} zwischen dem jeweiligen Lager LA_{R}, LA_{S} und der Motorwelle bzw. dem damit leitfähig verbundenen Rotor 2 erhöht, so steigt das BVR des gemassten und des geerdeten Stators 3 deutlich an, das des Rotors 2 mit isolierten Lagersitz fällt dabei bei ausreichend großem Bypass-Kondensator C_{Bypass} deutlich ab, womit eine Reduktion der Lagerspannung erreicht wird.

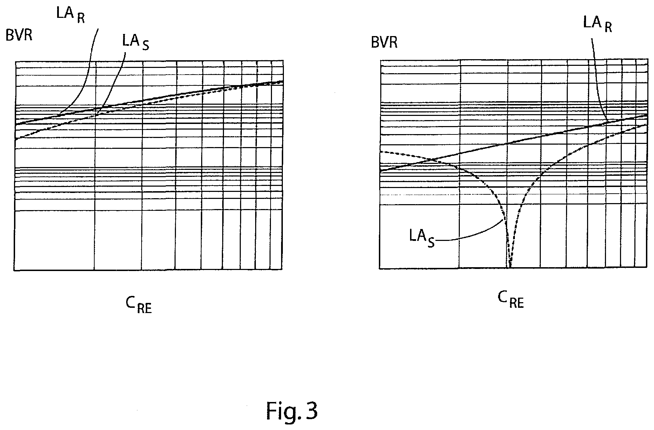

Die Figur 3 stellt den Zusammenhang des BVR- Verhältnisses bei variierender Rotor-Erd-Kapazität C_{RE} dar und zwar in der Darstellung links ohne einen Bypass-Kondensator C_{Bypass} und in der Darstellung rechts daneben mit einem Bypass-Kondensator C_{Bypass}.

## Patentansprüche

1. Elektrische Maschine mit einer Vorrichtung zur Reduzierung von schädlichen Lagerspannungen in der, von einer Zwischenkreisspannung eines Zwischenkreises gespeisten, elektrischen Maschine (M) umfassend einen Wicklungen (7) aufweisenden, gegenüber einem Schutzerdpotential (PE) und einem Massepotential (GND) isolierten Stator (3) und einen Rotor (2) und eine Motorwelle, wobei ferner ein rotorseitiges Lager (LA_{R}) und ein statorseitiges Lager (LA_{S}) jeweils gegenüber dem Schutzerdpotential (PE) und dem Massepotential (GND) isoliert ausgebildet sind und wobei der Rotor (2) und der Stator (3) über eine Bypass-Kapazität (C_{Bypass}) mit vorbestimmter Kapazität elektrisch miteinander verbunden sind, **dadurch gekennzeichnet, dass** die Bypass-Kapazität (C_{Bypass}) durch das Einbringen eines Bypass-Kondensators zwischen den Rotor (2) und den Stator (3) realisiert ist, wobei die Bypass-Kapazität (C_{Bypass}) von der Größenordnung einem mehrfachen der Lagerkapazität entspricht, wobei ein Y-Kondensator mit ausreichender Isolationsfestigkeit auf der einen Seite mit dem Statorpaket des Stators (3) elektrisch verbunden und die andere Seite des Y-Kondensators an einen Wellenkontaktring oder Wellenkondensator angeschlossen ist, wobei die Konfiguration des Wellenkontaktrings oder Wellenkondensators dergestalt ist, dass dieser ebenfalls eine Kapazität zur Motorwelle aufweist.

2. Elektrische Maschine gemäß Anspruch 1, **dadurch gekennzeichnet, dass** die Bypass-Kapazität (C_{Bypass}) durch das Einbringen eines Dielektrikums zwischen den Rotor (2) und den Stator (3) realisiert ist.

3. Elektrische Maschine gemäß Anspruch 1 oder 2, **dadurch gekennzeichnet, dass** die Realisierung der Bypass-Kapazität (C_{Bypass}) mittels diskret aufgebauten Kondensatoren erfolgt.

4. Elektrische Maschine gemäß einem der vorhergehenden Ansprüche, **dadurch gekennzeichnet, dass** der oder die Bypass-Kondensatoren über Schleifringe oder Bürsten elektrisch an die Motorwelle angebunden sind.

5. Verfahren zur Konfiguration der Kapazität eines Bypass-Kondensators in einer elektrischen Maschine mit einer Vorrichtung zur Reduzierung von schädlichen Lagerspannungen gemäß einem der Ansprüche 1 bis 4 bei der die Gleichtaktspannung U_{CM} angelegt ist mit den folgenden Schritten:
a) Variieren der Bypass-Kapazität (C_{Bypass}) beginnend von einem niedrigern Kapazität hin zu einer realtiv dazu erhöhten Kapazität;
b) Ermitteln des BVR-Verhältnis der angelegten Gleichtaktspannung U_{CM} zur Spannung am Lager sowohl für das rotorseitige Lager LA_{R} als auch für das statorseitigen LA_{S};
c) Bestimmen desjenigen Wertes der Bypass-Kapazität (C_{Bypass}) bei der das BVR-Verhältnis einen vorgegebenen Sollwert übersteigt, wobei die dazu korrespondierende Kapazität als Bypass-Kapazität (C_{Bypass}) für die Vorrichtung ausgewählt und verwendet wird.

## Claims

1. An electrical machine with a device for reducing harmful bearing voltages in the electrical machine (M) fed by a DC link voltage of a DC link, said electrical machine comprising a stator (3), which has windings (7) and is insulated from a protective earth potential (PE) and a ground potential (GND), and a rotor (2) and a motor shaft, wherein furthermore a rotor-side bearing (LA_{R}) and a stator-side bearing (LA_{S}) are each insulated from the protective earth potential (PE) and the ground potential (GND) and the rotor (2) and the stator (3) are electrically connected to each other by means of a bypass capacitance (C_{Bypass}) having a predefined capacitance, **characterized in that** the bypass capacitance (C_{Bypass}) is implemented by introducing a bypass capacitor between the rotor (2) and the stator (3), wherein the level of the bypass capacitance (C_{Bypass}) corresponds to a multiple of the bearing capacitance, wherein a Y-capacitor having sufficient dielectric strength is electrically connected on one side to the stator core of the stator (3), and the other side of the Y-capacitor is connected to a shaft contact ring or a shaft capacitor, wherein the configuration of the shaft contact ring or shaft capacitor is such that it also has a capacitance relative to the motor shaft.

2. The electrical machine according to claim 1, **characterized in that** the bypass capacitance (C_{Bypass}) is implemented by introducing a dielectric between the rotor (2) and the stator (3).

3. The electrical machine according to claim 1 or 2, **characterized in that** the implementation of the bypass capacitance (C_{Bypass}) is accomplished by means of discretely constructed capacitors.

4. The electrical machine according to any one of the preceding claims, **characterized in that** the bypass capacitor(s) are electrically connected to the motor shaft via slip rings or brushes.

5. A method of configuring the capacitance of a bypass capacitor in an electrical machine with a device for reducing harmful bearing voltages according to any one of claims 1 to 4, in which the common-mode voltage U_{CM} is applied, having the following steps:
a) varying the bypass capacitance (C_{Bypass}) starting from a lower capacitance to a capacitance increased relative thereto;
b) identifying the BVR ratio of the common-mode voltage U_{CM} applied to the voltage at the bearing both for the rotor-side bearing LA_{R} and for the stator-side bearing LA_{S};
c) determining that value of the bypass capacitance (C_{Bypass}) at which the BVR ratio exceeds a predetermined setpoint, the capacitance corresponding thereto being selected and used as a bypass capacitance (C_{Bypass}) for the device.

## Revendications

1. Machine électrique comportant un dispositif pour la réduction de tensions de palier nocives dans la machine électrique (M) alimentée par une tension de circuit intermédiaire d'un circuit intermédiaire, comprenant un stator (3) présentant des enroulements (7), isolé par rapport à un potentiel de terre de protection (PE) et à un potentiel de masse (GND), et un rotor (2) et un arbre de moteur, dans laquelle en outre un palier côté rotor (LA_{R}) et un palier côté stator (LA_{S}) sont réalisés chacun de manière isolée par rapport au potentiel de terre de protection (PE) et au potentiel de masse (GND), et dans laquelle le rotor (2) et le stator (3) sont connectés électriquement l'un à l'autre par l'intermédiaire d'une capacité de dérivation (C_{Bypass}) présentant une capacité prédéterminée, **caractérisée en ce que** la capacité de dérivation (C_{Bypass}) est réalisée par l'introduction d'un condensateur de dérivation entre le rotor (2) et le stator (3), dans laquelle la capacité de dérivation (C_{Bypass}) correspond, en ordre de grandeur, à un multiple de la capacité de palier, dans laquelle un condensateur Y présentant une rigidité diélectrique suffisante est connecté électriquement d'un côté au paquet de tôles statoriques du stator (3) et l'autre côté du condensateur Y est raccordé à une bague de contact d'arbre ou à un condensateur d'arbre, dans laquelle la configuration de la bague de contact d'arbre ou du condensateur d'arbre est telle que celle-ci ou celui-ci présente également une capacité par rapport à l'arbre de moteur.

2. Machine électrique selon la revendication 1, **caractérisée en ce que** la capacité de dérivation (C_{Bypass}) est réalisée par l'introduction d'un diélectrique entre le rotor (2) et le stator (3).

3. Machine électrique selon la revendication 1 ou 2, **caractérisée en ce que** la réalisation de la capacité de dérivation (C_{Bypass}) s'effectue au moyen de condensateurs à structure discrète.

4. Machine électrique selon l'une quelconque des revendications précédentes, **caractérisée en ce que** le ou les condensateurs de dérivation sont connectés électriquement à l'arbre de moteur par l'intermédiaire de bagues collectrices ou de balais.

5. Procédé de configuration de la capacité d'un condensateur de dérivation dans une machine électrique comportant un dispositif pour la réduction de tensions de palier nocives selon l'une quelconque des revendications 1 à 4, dans lequel la tension de mode commun U_{CM} est appliquée, comprenant les étapes suivantes :
a) la variation de la capacité de dérivation (C_{Bypass}) en partant d'une faible capacité vers une capacité relativement augmentée par rapport à celle-ci;
b) la détermination du rapport BVR de la tension de mode commun U_{CM} appliquée par rapport à la tension au niveau du palier, aussi bien pour le palier côté rotor LA_{R} que pour le palier côté stator LAs ;
c) la détermination de la valeur de la capacité de dérivation (C_{Bypass}) pour laquelle le rapport BVR dépasse une valeur de consigne prédéfinie, la capacité correspondant à celle-ci étant sélectionnée et utilisée comme capacité de dérivation (C_{Bypass}) pour le dispositif.
